# EUROPÄISCHE PATENTSCHRIFT

(11) **EP 1 266 576 B1**
(45) Veröffentlichungstag und Bekanntmachung des Hinweises auf die Patenterteilung: **06.06.2007**
(21) Anmeldenummer: 02011891.5
(22) Anmeldetag: 29.05.2002
(51) Int. Cl.: A23G 3/04, F28F 9/22, A23G 3/02

(54) **Kocher**
Cooker
Cuiseur

(30) Priorität: 12.06.2001 DE 10128287
(43) Veröffentlichungstag der Anmeldung: 18.12.2002
(73) Patentinhaber: Klöckner Hänsel Processing GmbH, 30163 Hannover (DE)
(72) Erfinder: Koch, Bernhard, 30655 Hannover (DE); Jahnel, Rainer, 31515 Wunstorf (DE); Dittrich, Markus, 31535 Neustadt am Rübenberge (DE)
(74) Vertreter: Taruttis, Stefan Georg

(56) Entgegenhaltungen:
- EP-A- 0 407 819
- WO-A-99/50608
- DE-A- 2 410 292
- US-A- 2 391 244
- US-A- 2 873 098
- US-A- 3 240 267
- US-A- 3 351 131
- US-A- 4 724 754
- US-A- 5 044 427
- PATENT ABSTRACTS OF JAPAN vol. 009, no. 057 (M-363), 13. März 1985 (1985-03-13) -& JP 59 191897 A (BABCOCK HITACHI KK), 31. Oktober 1984 (1984-10-31)

## Beschreibung

Die Erfindung betrifft eine üblicherweise als "Kocher" bezeichnete Vorrichtung zur Wärmebehandlung von Massen für die Herstellung von Zuckerwaren.

Die wesentlichen Bestandteile solcher Massen sind Zucker oder Zuckeraustauschstoffe jeglicher Art im Gemisch mit anderen Nahrungs- und Genußmitteln wie Stärken, Milchprodukten, Geliermitteln und dergleichen. Die Wärmebehandlung kann je nach Art der Masse eine Erwärmung, eine Vorlösung und/oder eine Kochung sein, und die Anforderungen an die Wärmebehandlung können je nach Art der zu behandelnden Masse sehr unterschiedlich sein. Viele Massen enthalten Bestandteile, die bei der Erwärmung zum Anbrennen neigen oder die thermisch schonend zu verarbeiten sind. Dies gilt beispielsweise für Milch oder Milchbestandteile, Fruchtbestandteile oder Geliermittel wie Gelatine, Stärke, Pektin und Gummi Arabicum.

Es gibt verschiedene Typen von Kochern, die aber sämtlich noch nicht in allen Punkten befriedigend sind. Die wohl ältesten Typen waren die sogenannten Satzkocher (eine Art beheizter Kessel), die oftmals auch mit Rührwerken ausgerüstet waren und für ein chargenweises Verarbeiten einfacher, wenig empfindlicher Massen auch geeignet waren. Sobald die Massen aber zum Anbrennen neigten, gab es Probleme. Es half lediglich zum Teil, die Rührer mit Schabern zu versehen ("geschabte Heizflächen"). Außerdem war mit diesen Kochern kein kontinuierliches Arbeiten möglich.

Für ein kontinuierliches Arbeiten werden bis heute die sogenannten Schlangenkocher eingesetzt, bei denen die zu behandelnde Masse durch eine von einem äußeren Heizmedium erwärmte Rohrschlange strömt. Allerdings ergibt sich auch hier das Problem des Anbrennens. Dem versucht man auf verschiedene Weise zu begegnen, beispielsweise durch einen abgeflachten Querschnitt der Rohrschlange zur Geschwindigkeitserhöhung im Wandbereich oder durch zusätzliche Einbauten in der Rohrschlange, also letztlich durch Maßnahmen, durch die die Kontaktzeit zwischen Masse und Heizfläche möglichst gering gehalten werden soll.

Der Erfolg solcher Maßnahmen ist jedoch begrenzt, und der Kocher muß häufig zur Reinigung abgeschaltet werden. Manche Massen, insbesondere solche auf Basis von Stärke, können überhaupt nicht zufriedenstellend verarbeitet werden. Für diese Massen wurden bislang vorzugsweise die sogenannten Jet-Kocher eingesetzt, bei denen Heißdampf direkt in die Masse eingeblasen wird. Der Vorteil dieses Verfahrens ist die relativ einfache technische Umsetzung und die Tatsache, daß keine Heizfläche vorhanden ist, an der die Masse anbrennen kann. Nachteilig ist dagegen der direkte Kontakt zwischen Heizmedium und Masse.

In jüngerer Zeit ist ein Kochertyp bekannt geworden, der nach dem Prinzip eines Röhren-Wärmeaustauschers arbeitet und beispielsweise in der DE-C 35 28 426 beschrieben ist. Bei diesem Kocher wird das Rohrbündel eines langgestreckten Röhren-Wärmeaustauschers von dem Heizmedium durchströmt, während die zu behandelnde Masse innerhalb des Mantelgehäuses des Wärmeaustauschers die Rohre außen umspült. Sie wird mit Hilfe von Prallblechen oder Umlenkblechen, die sich im Innenraum des Wärmeaustauschers befinden und von den Rohren des Rohrbündels durchdrungen werden, in einen im wesentlichen quer zu den Rohren des Rohrbündels verlaufenden Strömungsweg gezwungen und erfährt dabei an den Rohren eine zusätzliche Verwirbelung. Das ergibt eine gute Energieübertragung, durch die die Anwendung einer nur geringen Temperaturdifferenz zwischen Masse und Heizmedium möglich ist, mit der Folge, daß eine vorhandene Neigung zum Anbrennen vermindert und die Produktqualität verbessert wird.

Bei der Erwärmung bzw. dem Kochen von zum Anbrennen neigenden Produkten bildet sich nämlich bei allen üblichen kontinuierlichen Kochern mit nicht geschabter Heizfläche ein Produktansatz auf der Heizfläche. Die Schichtdicke dieses Produktansatzes vergrößert sich im Laufe der Zeit, wodurch der Wärmeübergang vom Heizmedium zum Produkt reduziert wird. Um die gewünschte Produkttemperatur konstant zu halten, muß die Temperatur des Heizmediums erhöht werden, wodurch der Anbrenneffekt noch beschleunigt wird. Weiterhin führen diese Anbrennungen zum Risiko einer Ablösung von verbrannten Partikeln, welche sich dann im Produkt verteilen. Bei Verwendung von thermolabilen Produkten erfolgt außerdem ein zumindst partieller thermischer Abbau dieser Produkte, welcher sich als Verfärbung äußern kann und teilweise mit überdosierungen kompensiert wird. Dies alles ist bei dem aus der DE-C 35 28 426 bekannten Kocher besser vermieden als bei den übrigen Kochertypen.

Dieser bekannte Kocher weist aber noch Mängel auf, was insbesondere auf die Umlenkbleche zurückzuführen ist. Die Umlenkbleche definieren nämlich zwischen sich quer zu den Rohren verlaufende Strömungskammern in solcher Anordnung, daß die Masse abwechselnd durch einen ringförmigen Spalt zwischen dem einen Umlenkblech und der Innenwandung des Kochers und dann durch eine zentrale Öffnung im nächsten Umlenkblech hindurch strömt, also praktisch von der Randzone des Kochers zur Mitte, und dann wieder zur Randzone, usw. Dabei existieren im Zufuhr- und Abflußbereich der Masse allerdings Zonen ohne Zwangs-Durchströmung, d.h. in diesen Bereichen kann Masse undefiniert lange verweilen, wodurch hier Verbrennungserscheinungen möglich sind. Des weiteren werden die dampfführenden Rohre im Bereich von zentrischen Öffnungen der Umlenkbleche teilweise nicht quer angeströmt, sondern in Längsrichtng zu diesen Rohren, wodurch in diesem Bereich die Masse nicht verwirbelt werden kann. Konstruktiv bedingt existieren außerdem an den Umlenkblechen mit Randausnehmung im Bereich der Mittelachse zwischen den dampfführenden Rohren Zonen, welche nicht durchströmt werden.

Mit der Erfindung sollen diese Mängel vermieden werden und der Technik ein Kocher zur Verfügung gestellt werden, der für alle möglichen Arten von zu behandelnden Massen optimal geeignet ist.

Ausgehend von einem Kocher in Form eines Röhren-Wärmeaustauschers, bei dem sich innerhalb eines Mantelgehäuses ein Bündel von engständigen, von einem Heizmedium durchströmten Rohren erstreckt und die zu behandelnde über seitliche Stutzen zu- und abgeführte Masse die Rohre von außen umspült, wobei im Mantelgehäuse Umlenkbleche vorgesehen sind, die Strömungskammern abgrenzen und Öffnungen zum Übergang der zu behandelnden Masse von einer Strömungskammer zur nächsten aufweisen, ist erfindungsgemäß vorgesehen, daß die Umlenkbleche in einem schmalen Randbereich mit segmentartigen Öffnungen versehen sind und diese Öffnungen sich abwechselnd an diametral gegenüberliegenden Seiten der Innenwandung des Mantelgehäuses befinden, wobei die Öffnung des in Strömungsrichtung ersten Umlenkbleches dem Zulaufstutzen für die Masse und die Öffnung des letzten Umlenkbleches dem Abfuhrstutzen gegenüberliegen.

Mit der Erfindung wird in konstruktiv einfacher, aber außerordentlich wirkungsvoller Weise erreicht, daß die zu behandelnde Masse auf einen zickzack-förmigen Strömungsweg quer zu den Heizrohren geführt wird und es keine Bereiche gibt, in denen Teilströme ausbrechen und sich irgendwo mit unkontrollierter Verweilzeit aufhalten können. Somit kann die Masse innerhalb der Kammern nur quer zu den Heizrohren strömen, niemals aber im Gleichstrom zu den Rohren. Im Verein mit den übrigen inhärenten Vorteilen eines nach dem Prinzip eines Röhren-Wärmeaustauschers arbeitenden Kochers wird so für praktisch jede zu behandelnde Masse unabhängig von deren Zusammensetzung ein optimales Ergebnis sichergestellt. Es versteht sich, daß dabei die Betriebsparameter des Kochers, wie Temperatur, Druck und Durchsatzgeschwindigkeit, in an sich bekannter Weise auf die behandelte Masse einzustellen sind.

Weitere Einzelheiten und Merkmale der Erfindung sind in den Unteransprüchen definiert und in Ausführungsbeispielen anhand der Zeichnung näher erläutert. Dabei stellen dar:
- Fig. 1: den Grundtyp eines erfindungsgemäßen Kochers in perspektivisch-schematischer Ansicht,
- Fig. 2: in gleicher Ansicht Beispiele für die Ausbildung der seitlichen Durchlaß-Öffnungen in den Umlenkblechen,
- Fig. 3: ein Beispiel für die Veränderung des Querschnitts der Durchlaß-Öffnungen, und
- Fig. 4: ein anderes Beispiel dafür.

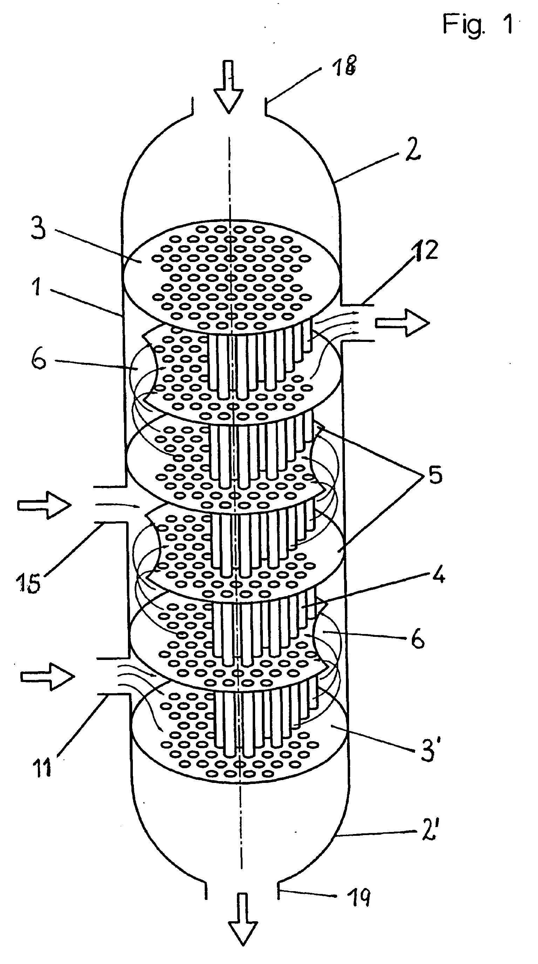

Der in Fig. 1 schematisch dargestellte Grundtyp des Kochers geht aus von dem Prinzip eines Rohrbündel-Wärmeaustauschers. Es ist ein im wesentlichen rohrförmiges Mantelgehäuse 1 vorgesehen, das an seinen beiden Enden in eine Abschlußhaube 2, 2' übergeht. Im Bereich des Übergangs vom Mantelgehäuse 1 in die Abschlußhauben befinden sich zwei Rohrplatten 3, 3', die eine Vielzahl von engständigen Bohrungen aufweisen, zwischen denen sich ein entsprechend engständiges Bündel von vorzugsweise gradlinigen Rohren 4 erstreckt.

Das soweit beschriebene Gerät besitzt eine sehr schlanke Form (das Verhältnis von Länge zum Durchmesser ist größer als 3:1) und ist stehend ausgeführt. Es ist mit mehreren Anschlüssen versehen, nämlich dicht oberhalb des unteren Bodens 3' mit einem Stutzen 11 für die Zuführung der zu behandelnden Masse, dicht unterhalb des oberen Bodens 3 mit einem Stutzen 12 für die Abführung der behandelten Masse sowie im Bereich der beiden Abschlußhauben 2, 2' mit zwei Stutzen 18 und 19 für die Zufuhr bzw. die Abfuhr eines Heizmediums. Weitere Anschlußstutzen können vorgesehen sein für die zusätzliche Zufuhr bzw. auch Abfuhr von Masse. Dies ist in Fig. 1 am Beispiel des Hilfsanschlusses 15 dargestellt.

Im Betrieb strömt die zu behandelnde Masse vom unteren Zufuhrstutzen 11 innerhalb des Mantelgehäuses empor und ver läßt es am oberen Abfuhrstutzen 12. Das Heizmedium strömt im Gegenstrom von oben nach unten, es tritt in den oberen Zufuhrstutzen 18 ein, durchströmt das Bündel von Rohren 4 und verläßt das Gerät am unteren Abfuhrstutzen 19. Im übrigen kann selbstverständlich auch der obere Stutzen 12 ein Zufuhrstutzen und der untere Stutzen 11 ein Abfuhrstutzen sein, sodaß die Masse den Kocher von oben nach unten durchströmt. Für das Heizmedium gilt dann gegebenenfalls die umgekehrte Strömungsrichtung. Entscheidend ist es jeweils, daß innerhalb des Mantelgehäuses Umlenkbleche 5 vorgesehen sind, die, jeweils mit Ausnahme einer Aussparung 6, strömungsdicht an die Innenwandung des Mantelgehäuses anschließen und auch strömungsdicht von den Rohren 4 durchdrungen werden. Die Aussparungen 6 der Umlenkbleche sind dabei in aufsteigender Reihenfolge diametral gegeneinander versetzt, und zwar derart, daß sich die Aussparung 6 des ersten, untersten Umlenkbleches genau auf der gegenüberliegenden Seite des Zufuhrstutzens 11 befindet, die Aussparung des nächst höheren Umlenkbleches 5 auf der gegenüberliegenden Seite der ersten Aussparung, usw. bis zur obersten Aussparung, die sich wiederum auf der gegenüberliegenden Seite des Abfuhrstutzens 12 befindet.

Durch die Umlenkbleche wird der Innenraum des Kochers in einzelne Strömungskammern unterteilt, und durch die diametral gegenüberliegende Anordnung der Aussparungen 6 wird erreicht, daß die in das Mantelgehäuse einströmende Masse die einzelnen Kammern jeweils zick-zack-förmig von unten nach oben durchströmt, bis die Masse schließlich am Abfuhrstutzen 12 wieder austritt. Die Masse kann nur im Bereich der Aussparungen 6 von einer Kammer in die nächstfolgende Kammer gelangen, und zwar mit jeweils einer Umlenkung um 180°. Somit kann die Masse innerhalb der Kammern nur quer zu den Rohren 4 strömen, niemals aber im Gleichstrom zu den Rohren. Dadurch gibt es an den einzelnen Rohren nur jeweils sehr kurze Berührungszeiten, die an allen Stellen innerhalb des Kochers praktisch nahezu gleich lang sind. Irgendwelche Stellen der heizenden Rohre 4, die wesentlich längere Berührungszeiten zur Masse aufweisen, bei denen also die Verweilzeit von Teilströmen wesentlich vom Hauptstrom abweicht, gibt es nicht. Die Masse wird also gleichmäßig und schonend erwärmt.

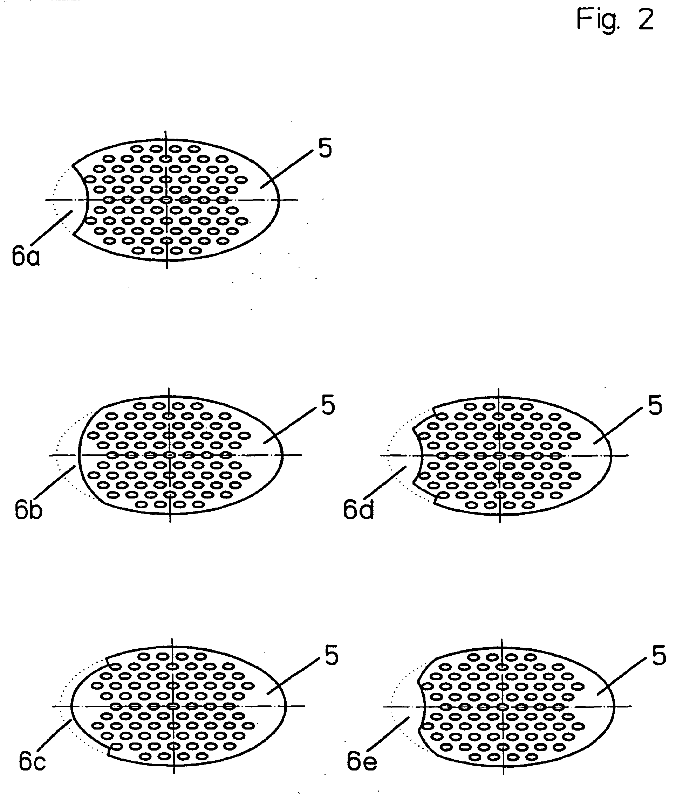

Insgesamt sind die Strömungs-Einbauten innerhalb des Mantelgehäuses, also die Umlenkbleche 5 mit den Aussparungen 6, so ausgeführt, daß der Viskositätsveränderung der zu behandelnden Masse derart Rechnung getragen wird, daß die Strömungsgeschwindigkeit quer durch das Rohrbündel zwischen zwei Umlenkblechen möglichst konstant ist. Dies kann dadurch geschehen, daß der Abstand zwischen zwei Umlenkblechen, also das Volumen der zwischen zwei Umlenkblechen gebildeten Kammern unterschiedlich ist, beispielsweise von unten nach oben in definierter Weise zunimmt. Auch die Größe und Form der Aussparungen 6 kann entsprechend der Forderung nach möglichst gleichmäßiger Strömungsgeschwindigkeit entlang des Strömungsweges der Masse unterschiedlich sein, wobei die Details der Größe und Form der Aussparung 6 natürlich auch durch die Art der zu behandelnden Masse beeinflusst wird. Die Fig. 2 zeigt fünf Beispiele von unterschiedlich ausgebildeten Aussparungen 6a-6e.

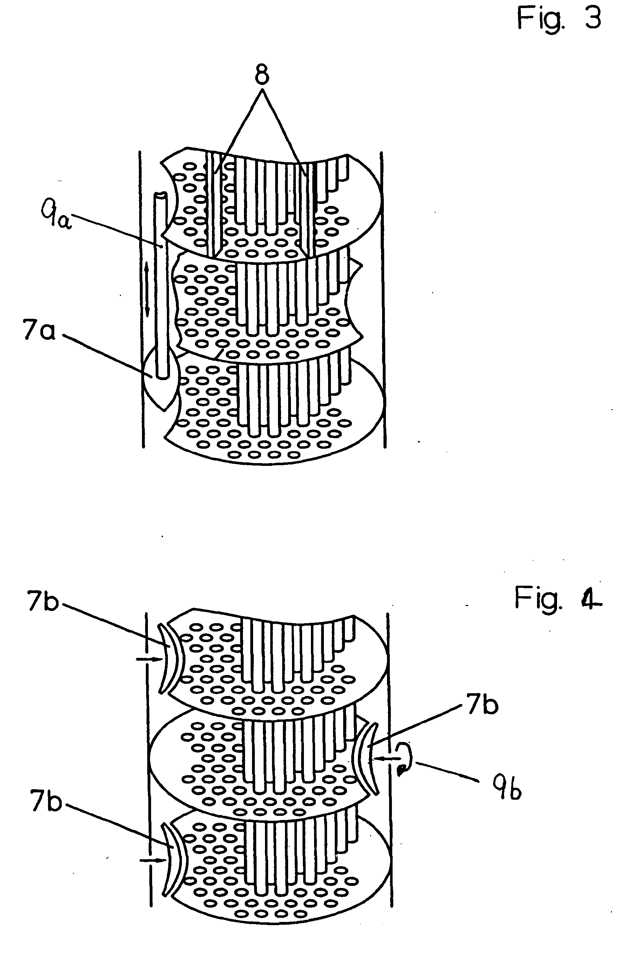

Bei der Beschreibung des erfindungsgemäßen Kochers wurde bislang unterstellt, daß die Strömungs-Einbauten innerhalb des Mantelgehäuses 1 nicht variabel sind. Dies muß nicht sein. Im weiteren Verfolg des Erfindungsgedankens kann vorgesehen sein, Größe und Form der Aussparungen 6 veränderlich zu gestalten. Die Fig. 3 zeigt eine Möglichkeit einer stufenlosen Verengung der Aussparungen 6 mit Hilfe einer Verstellplatte 7a, die mittels eines von außerhalb der Vorrichtung zu bedienenden Gestänges 9a nach oben oder unten verschoben wird und damit Größe und Form der Aussparung 6 verändert. Die Fig. 4 läßt eine equivalente Lösung mit Hilfe von Verstellsegmenten 7b erkennen, die beispielsweise mit Hilfe eines Drehantriebs 9b von einer vertikalen in eine horizontale Position gedreht werden können, um Fläche und Form der Aussparung 6 zu verändern. In beiden Fällen der Fig. 3 und 4 läßt sich so, ohne den Kocher demontieren zu müssen, eine Änderung der Innenstruktur des Kochers erreichen. Dies kann beispielsweise erforderlich sein, wenn dramatische Änderungen in der Konsistenz der zu bearbeitenden Masse eintreten und dies erweist sich auch als vorteilhaft, wenn ein Kocher von der Bearbeitung einer Masse A auf die Bearbeitung einer anderen Masse B umgestellt werden soll.

Die Fig. 3 läßt im übrigen noch die Möglichkeit erkennen, mit Hilfe von Ablenkleisten 8 die Gleichmäßigkeit der Querströmung zu unterstützen. Natürlich können, was zeichnerisch nicht mehr weiter dargestellt ist, die Leisten 8 auch um ihre Längsachse drehbar ausgebildet sein, so daß sie je nach Bedarf mehr oder weniger quer zur Strömung der Masse gerichtet sind und die Strömung der Masse damit mehr oder weniger stark beeinflussen.

Ebenfalls nicht weiter zeichnerisch dargestellt ist die Möglichkeit, die Umlenkbleche 5 als solche verschiebbar innerhalb des Mantelgehäuses 1 anzuordnen, beispielsweise mit Hilfe eines Gestänges analog dem Gestänge 9a, um die Größe der Kammern zwischen zwei Umlenkblechen zu variieren, und zwar wiederum entweder während des Betriebs bei der Behandlung einer bestimmten Masse A als auch bei der Umstellung von der Masse A auf eine Masse B.

Schließlich sei noch erwähnt, daß ein kreisrunder Querschnitt des Mantelgehäuses 1 zwar eine übliche Ausbildung von Rohrbündel-Wärmeaustauschern darstellt, aber keineswegs für den hier beschriebenen Kocher eine zwingende Ausbildung ist. Vielmehr ist es ebenso möglich und in manchen Fällen vorteilhaft, das Mantelgehäuse 1 mit einer anderen Querschnittsform zu versehen, beispielsweise oval oder eliptisch oder gegebenenfalls auch länglich-polygon. Dadurch kann in Einzelfällen, wenn es die Parameter der zu behandelnden Masse erfordern, noch besser auf eine gleichmäßige und schonende Erwärmung der Masse hingewirkt werden.

Gemeinsam ist allen möglichen Ausführungsformen des erfindungsgemäßen Kochers, daß die Temperaturdifferenz zwischen Heizmedium und End-Produkttemperatur sehr gering ist, so daß eine sehr schonende Erwärmung stattfindet. Dies wirkt bei Produkten, die zum Anbrennen neigen, einer Produktanhaftung an den Heizflächen entgegen. Zwar sind solche Produktanhaftungen nicht in allen Fällen völlig ausgeschlossen, aber sie sind im Vergleich zu bekannten Kochern mit nicht geschabten Heizflächen (einschließlich dem aus de DE-C 35 28 426 bekannten Kocher) gering und können nach relativ langen möglichen Produktionszeiten ohne Zwischenreinigung mit vergleichsweise einfachen Mitteln entfernt werden, d.h. in der Regel ohne chemische Zusätze. Die Möglichkeit der Zugabe von besonders stark zum Anbrennen neigenden Produkten zu einer bereits erwärmten Hauptmasse über einen oder mehrere zusätzliche, seitliche Stutzen, beispielsweise den Hilfsstutzen 15 zwischen Ein- und Auslauf, verbessert dieses Verhalten noch weiter.

Eine vorteilhafte Verwendung dieses Kochers ist aber auch für Rezepturen gegeben, welche keine zum Anbrennen neigenden Bestandteile enthalten, da die reduzierte thermische Beanspruchung sich auch hier positiv auf die Produktqualität auswirkt. Durch nachgeschaltete Baugruppen oder -teile ist es möglich, den Druck im Kocher so zu beeinflussen, daß zum einen durch Erwärmen unter überdruck höhere Temperaturen ohne Reduzierung des Wasseranteils als unter atmosphärischen Bedingungen möglich sind, z.B. zur Karamelisationsbeschleunigung (Siedeverzug), bzw. unter Unterdruck bei niedrigen Temperaturen höhere Trockensubstanzen produktschonend erreicht werden können, z.B. zur Karamelisationsverzögerung. Der kompakte Aufbau und die im Vergleich zu bekannten Kochern geringeren äußeren Abmessungen erlauben bei geringem konstruktiven Aufwand eine einfache Einbindung des Kochers in ein Anlagenkonzept.

## Patentansprüche

1. Kocher zur Herstellung von Masse für Zuckerwaren in Form eines Rohrbündelwärmeaustauschers mit einem Bündel engständiger Rohre (4), von Heizmedium zu durchströmen, die innerhalb eines Mantelgehäuses (1) angeordnet sind, mit einem seitlichen Zufuhrstutzen (11) zur Zuführung der Masse und einem seitlichen Abfuhrstuzen (12) zur Abführung der Masse, die die Rohre (4) außen umspült, und Umlenkblechen (5), die jeweils mit Ausnahme einer Aussparung (6) im Randbereich strömungsdicht an die Innenwandung des Mantelgehäuses (1) anschließen und die strömungsdicht von den Rohren (4) durchdrungen werden und Strömungskammern abgrenzen, die jeweils nur durch einzelne, gegen diejenige des benachbarten Umlenkblechs (5) versetzte Aussparung (6), die an der Innenwandung des Mantelgehäuses angeordnet ist, nacheinander von der Masse durchströmt werden können, und wobei Zufuhr- und Abfuhrstutzen (11, 12) jeweils gegenüber der Aussparung (6) des nächsten Umlenkblechs (5) angeordnet sind, **dadurch gekennzeichnet, dass**
zwischen Zufuhrstutzen (11) und Abfuhrstuzen (12) noch weitere Anschlußstutzen (15) vorgesehen sind.

2. Kocher nach Anspruch 1, **dadurch gekennzeichnet, dass** der Abstand der Umlenkbleche (5) zueinander unterschiedlich ist.

3. Kocher nach Anspruch 1 oder 2, **dadurch gekennzeichnet, dass** der Abstand der Umlenkbleche (5) ohne Demontage des Kochers veränderbar ist.

4. Kocher nach einem der vorangehenden Ansprüche, **dadurch gekennzeichnet, dass** Form und Größe der Aussparungen (6) in den Umlenkblechen (5) unterschiedlich ist.

5. Kocher nach Anspruch 4, **dadurch gekennzeichnet, dass** Form und Größe der Aussparungen (6) in den Umlenkblechen (5) ohne Demontage des Kochers veränderbar ist.

6. Kocher nach Anspruch 5, **dadurch gekennzeichnet, dass** bewegbar angeordnete Verstellsegmente (7a, 7b) zur Änderung von Form und Größe der Aussparungen (6) in den Umlenkblechen (5) vorgesehen sind.

7. Kocher nach einem der vorhergehenden Ansprüche, **dadurch gekennzeichnet, dass** zusätzliche Ablenkleisten (8) vorgesehen sind, die sich innerhalb einzelner Strömungskammern in Richtung der Rohre (4) erstrecken.

8. Kocher nach Anspruch 7, **dadurch gekennzeichnet, dass** die Ablenkleisten (8) um ihre Längsachse drehbar sind.

9. Kocher nach einem der vorhergehenden Ansprüche, **dadurch gekennzeichnet, dass** das Mantelgehäuse (1) einen länglichen Querschnitt aufweist.

10. Kocher nach einem der vorhergehenden Ansprüche, **dadurch gekennzeichnet, dass** dem Kocher Baugruppen oder -teile nachgeordnet sind, durch welche der Druck im Kocher definiert auf Überdruck oder Vakuum eingestellt werden kann.

11. Kocher nach einem der vorhergehenden Ansprüche, **dadurch gekennzeichnet, dass** auch im Bereich der Aussparungen (6) in den Umlenkblechen (5) noch Rohre (4) angeordnet sind, welche von der Masse teilweise nicht vornehmlich quer angeströmt werden.

## Claims

1. Cooker for producing a mixture for confectionery in the form of a shell and tube heat exchanger with a bundle of tubes close together (4), through which a heating medium flows, which are arranged inside a shell (1), with a supply pipe at the side (11) for supplying the mixture and a removal pipe at the side (12) for removing the mixture, which washes around the pipes (4) on the outside, and deflector plates (5), which are each connected to the inside wall of the shell (1) so that they are sealed against the flow, with the exception of a recess (6) in the edge area, and are penetrated by the tubes (4), which are sealed against the flow, and delimit flow chambers, through which the mixture can flow successively only through individual recesses (6) offset against those of the adjacent deflector plate (5), which is arranged on the inside wall of the shell, and in which the supply and removal pipes (11, 12) are each arranged opposite the recess (6) of the next deflector plate (5), **characterised in that**
more connecting pipes (15) are provided between the supply pipe (11) and the removal pipe (15).

2. Cooker according to claim 1, **characterised in that** the mutual distance between the deflector plates (5) varies.

3. Cooker according to claim 1 or 2, **characterised in that** the distance between the deflector plates (5) can be changed without dismantling the cooker.

4. Cooker according to one of the previous claims, **characterised in that** the shape and size of the recesses (6) in the deflector plates (5) varies.

5. Cooker according to claim 4, **characterised in that** the shape and size of the recesses (6) in the deflector plates (5) can be changed without dismantling the cooker.

6. Cooker according to claim 5, **characterised in that** adjusting segments (7a, 7b), which are arranged so that they can move, are provided for changing the shape and size of the recesses (6) in the deflector plates (5).

7. Cooker according to one of the previous claims, **characterised in that** additional deflector strips (8) are provided, which extend inside individual flow chambers in the direction of the tubes (4).

8. Cooker according to claim 7, **characterised in that** the deflector strips (8) can be turned around their longitudinal axis.

9. Cooker according to one of the previous claims, **characterised in that** the shell (1) has an oblong cross section.

10. Cooker according to one of the previous claims, **characterised in that** the cooker has units or components downstream of it, through which the pressure in the cooker can be set and defined as overpressure or vacuum.

11. Cooker according to one of the previous claims, **characterised in that** more tubes (4) are also arranged in the area of the recesses (6) in the deflector plates (5), in which the mixture flows partly not predominantly crosswise.

## Revendications

1. Appareil de cuisson pour la production d'une masse pour la confiserie prenant la forme d'un échangeur de chaleur muni d'un faisceau de tuyauteries composé d'un faisceau de tuyaux indépendants (4) devant être parcourus par un produit de chauffage, disposés à l'intérieur d'un boîtier de manteau (1), avec un manchon latéral d'alimentation (11) pour alimenter en masse et un manchon latéral d'extraction (12) pour extraire la masse qui enveloppe les tuyaux (4) à l'extérieur, et de tôles de déviation (5) reliées de façon étanche à la paroi intérieure du boîtier du manteau à l'exception d'une réservation (6) située vers le bord, qui sont traversées par les tuyaux (4) et délimitent des chambres de débit ne pouvant être chacune parcourues que l'une après l'autre à travers la réservation (6) unique décalée par rapport à la tôle de déviation (5) qui est disposée sur la paroi intérieure du boîtier du manteau, sachant que les manchons d'alimentation et d'extraction (11, 12) sont chacun disposés en face de la réservation (6) de la prochaine tôle de déviation (5), **caractérisé par le fait que**
d'autres raccords (15) sont prévus entre le manchon d'alimentation (11) et le manchon d'extraction (12).

2. Appareil de cuisson selon la revendication 1, **caractérisé par le fait que** les écartements entre les tôles de déviation (5) sont différents.

3. Appareil de cuisson selon la revendication 1 ou 2, **caractérisé par le fait que** l'écartement entre les tôles de déviation (5) peuvent être modifiés sans démonter l'appareil de cuisson.

4. Appareil de cuisson selon une des revendications précédentes, **caractérisé par le fait que** la forme et la taille des réservations (6) dans les tôles de déviation (5) diffèrent.

5. Appareil de cuisson selon la revendication 4, **caractérisé par le fait que** la forme et la taille des réservations (6) dans les tôles de déviation (5) peuvent être modifiées sans démonter l'appareil de cuisson.

6. Appareil de cuisson selon la revendication 5, **caractérisé par le fait que** des segments de réglage (7a, 7b) disposés de façon modifiable sont prévus pour modifier la forme et la taille des réservations (6) dans les tôles de déviation (5).

7. Appareil de cuisson selon une des revendications précédentes, **caractérisé par le fait que** des barrettes supplémentaires de déviation (8) sont prévues, qui s'étendent à l'intérieur des différentes chambres de débit en direction des tuyaux (4).

8. Appareil de cuisson selon la revendication 7, **caractérisé par le fait que** l'on peut faire pivoter les barrettes de déviation (8) autour de leur axe longitudinal.

9. Appareil de cuisson selon une des revendications précédentes, **caractérisé par le fait que** le boîtier du manteau (1) présente une section oblongue.

10. Appareil de cuisson selon une des revendications précédentes, **caractérisé par le fait que** des sous-ensembles fonctionnels et composants sont disposés en aval de l'appareil de cuisson, avec lesquels on peut régler la pression définie comme surpression ou comme vide.

11. Appareil de cuisson selon une des revendications précédentes **caractérisé par le fait que** des tuyaux (4) ne pouvant partiellement pas être parcourus principalement de façon transversale sont encore disposés dans la zone des réservations (6) dans les tôles de déviation (5).
